# EUROPEAN PATENT SPECIFICATION

(11) **EP 4 052 927 B1**
(45) Date of publication and mention of the grant of the patent: **10.07.2024**
(21) Application number: 22158192.9
(22) Date of filing: 23.02.2022
(51) Int. Cl.: B60C 11/00

(54) **TIRE**
REIFEN
PNEUMATIQUE

(30) Priority: 04.03.2021 JP 2021034452
(43) Date of publication of application: 07.09.2022
(73) Proprietor: Sumitomo Rubber Industries, Ltd., Kobe-shi, Hyogo-ken 651-0072 (JP)
(72) Inventor: OMURA, Naoya, Kobe-shi, 651-0072 (JP)
(74) Representative: Manitz Finsterwald Patent- und Rechtsanwaltspartnerschaft mbB

(56) References cited:
- EP-A1- 3 255 092
- WO-A1-2014/125700
- WO-A1-2021/011906
- PL-B1- 190 799
- US-A1- 2017 121 494
- US-B2- 7 638 574

## Description

### TECHNICAL FIELD

The present invention relates to a tire.

### BACKGROUND OF THE INVENTION

In a polymer material such as a rubber material, energy loss, chipping resistance, and abrasion resistance are important physical quantities that affect various properties of products. For example, in a tire that is a rubber product, energy loss is closely related to fuel efficiency and grip performance, and chipping resistance and abrasion resistance are closely related to a life of a tire.

JP 2018-28100 A describes that abrasion resistance can be further improved by making a crosslinked state of a rubber composition uniform and reducing the number of gap parts during elongation.

Several methods for measuring properties of tires are known, for instance neutron scattering (see WO 2014/125700 A1 or EP 3 255 092 A1), chromatography (see WO 2021 /011906 A1), or X-ray scattering (see US 2017/121494 A1, EP 3 255 092 A1). Other way for describing the properties of tires, in particular with respect to chipping resistance and/or abrasion resistance, are based on tan δ, often in combination with temperature and/or rubber compositions of the respective tire (see PL 190 799 B1 or US 7 638 574 B2).

### SUMMARY OF THE INVENTION

In a case where a tread is formed of a plurality of rubber layers, if a thickness of the entire tread does not change, a thickness of each layer becomes thin and chipping easily occurs. In particular, it has been found that chipping easily occurs when crosslink densities differ greatly between adjacent rubber layers.

An object of the present invention is to provide a tire with improved chipping resistance.

As a result of intensive studies, it has been found that a scattering intensity for a specific scattering vector when a rubber sample is irradiated with neutron rays strongly correlates with non-uniformity of crosslinking of a rubber component. In addition, it has been found that chipping resistance is improved by setting the difference in scattering intensity described above within a predetermined range between the adjacent rubber layers of the tread.

That is, the present invention relates to a tire comprising a tread, the tread comprising n (n represents an integer of 3 or more) rubber layers, wherein, in a case where a rubber sample comprising interfaces of a k-th rubber layer (k represents an integer of 1 or more and n-2 or less) and a k+1-th rubber layer counted from a tread surface, cut out from the tread, is irradiated with neutron rays to perform a neutron scattering measurement, and a scattering intensity when a scattering vector calculated from a scattering intensity curve thus obtained is 0.12 nm⁻¹ is defined as Xₖ (cm⁻¹), and a rubber sample comprising interfaces of a k+1-th rubber layer and a k+2-th rubber layer counted from the tread surface, cut out from the tread, is irradiated with neutron rays to perform a neutron scattering measurement, and a scattering intensity when a scattering vector calculated from a scattering intensity curve thus obtained is 0.12 nm⁻¹ is defined as Xₖ₊₁ (cm⁻¹), | Xₖ - Xₖ₊₁ | is 0.10 cm⁻¹ or less for at least one k.

According to the present invention, provided is a tire with improved chipping resistance.

### BRIEF DESCRIPTION OF THE DRAWINGS

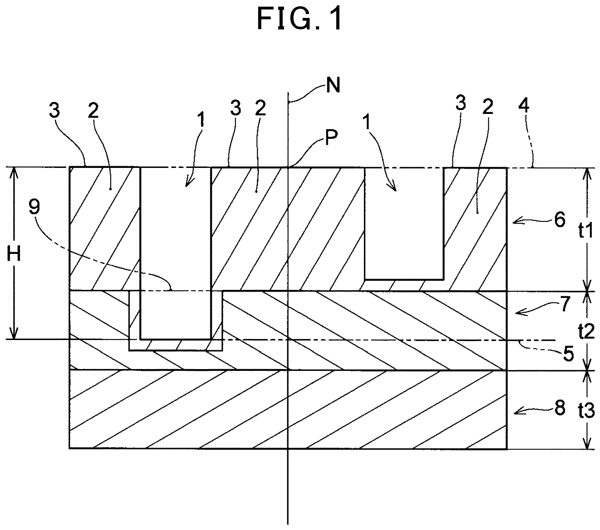

FIG. 1 is an enlarged cross-sectional view showing a part of a tread of a tire according to one embodiment of the present invention.

### DETAILED DESCRIPTION

The tire that is one embodiment of the present invention is a tire comprising a tread, the tread comprising n (n represents an integer of 3 or more) rubber layers, wherein, in a case where a rubber sample comprising interfaces of a k-th rubber layer (k represents an integer of 1 or more and n-2 or less) and a k+1-th rubber layer counted from a tread surface, cut out from the tread, is irradiated with neutron rays to perform a neutron scattering measurement, and a scattering intensity when a scattering vector calculated from a scattering intensity curve thus obtained is 0.12 nm⁻¹ is defined as Xₖ (cm⁻¹), and a rubber sample comprising interfaces of a k+1-th rubber layer and a k+2-th rubber layer counted from the tread surface, cut out from the tread, is irradiated with neutron rays to perform a neutron scattering measurement, and a scattering intensity when a scattering vector calculated from a scattering intensity curve thus obtained is 0.12 nm⁻¹ is defined as Xₖ₊₁ (cm⁻¹), |Xₖ - Xₖ₊₁| is 0.10 cm⁻¹ or less (preferably 0.09 cm⁻¹ or less, more preferably 0.08 cm⁻¹ or less, further preferably 0.07 cm⁻¹ or less, particularly preferably 0.06 cm⁻¹ or less) for at least one k. Besides, a lower limit of |Xₖ - Xₖ₊₁| is not particularly limited, but can be, for example, more than 0 cm⁻¹, 0.001 cm⁻¹ or more, or 0.01 cm⁻¹ or more.

It has been found that, in a case where a rubber sample comprising interfaces of adjacent rubber layers cut out from the tread is irradiated with neutron rays to perform a neutron scattering measurement, a scattering intensity when a scattering vector calculated from a scattering intensity curve thus obtained is 0.12 nm⁻¹ strongly correlates with non-uniformity of crosslinking of a rubber component. In the tire of the present invention, chipping resistance can be improved by setting the difference in scattering intensity described above within a predetermined range between the adjacent rubber layers of the tread.

The n is preferably 3, 4, 5, or 6, more preferably 3, 4, or 5, further preferably 3 or 4, particularly preferably 3.

In another embodiment of the present invention, for two or more k, |Xₖ - Xₖ₊₁| is 0.10 cm⁻¹ or less (preferably 0.09 cm⁻¹ or less, more preferably 0.08 cm⁻¹ or less, further preferably 0.07 cm⁻¹ or less, particularly preferably 0.06 cm⁻¹ or less).

In another embodiment of the present invention, for all k, |Xₖ - Xₖ₊₁| is 0.10 cm⁻¹ or less (preferably 0.09 cm⁻¹ or less, more preferably 0.08 cm⁻¹ or less, further preferably 0.07 cm⁻¹ or less, particularly preferably 0.06 cm⁻¹ or less).

In another embodiment of the present invention, when at least k is 1, |Xₖ - Xₖ₊₁| is 0.10 cm⁻¹ or less (preferably 0.09 cm⁻¹ or less, more preferably 0.08 cm⁻¹, further preferably 0.07 cm⁻¹ or less, particularly preferably 0.06 cm⁻¹ or less).

In the tire of the present invention, X₁ is preferably 1.00 cm⁻¹ or less, more preferably 0.90 cm⁻¹ or less, further preferably 0.70 cm⁻¹ or less, particularly preferably 0.50 cm⁻¹ or less.

In the tire of the present invention, both X₁ and X₂ are preferably 1.00 cm⁻¹ or less, more preferably 0.90 cm⁻¹ or less, further preferably 0.70 cm⁻¹ or less, particularly preferably 0.50 cm⁻¹ or less.

In the tire of the present invention, for all k, both Xₖ and Xₖ₊₁ are preferably 1.00 cm⁻¹ or less, more preferably 0.90 cm⁻¹ or less, further preferably 0.70 cm⁻¹ or less, particularly preferably 0.50 cm⁻¹ or less.

Besides, |Xₖ - Xₖ₊₁| of the tire of the present invention can be appropriately adjusted by controlling the crosslinked state of the rubber composition by the method described later. In addition, |Xₖ - Xₖ₊₁| can be appropriately adjusted depending on types and compounding amounts of rubber components, fillers, plasticizers, and the like which will be described later.

The tread has circumferential grooves continuously extending in a tire circumferential direction, and a deepest portion of a groove bottom of at least one of the circumferential grooves is preferably formed so as to be located inside in a tire radial direction with respect to an outermost side of a second rubber layer counted from a tread surface.

The tread of the present invention has three or more rubber layers. A structure of the rubber layer is not particularly limited, but at least has a first layer whose outer surface forms a tread surface (a first rubber layer counted from the tread surface), a second layer adjacent to inside in a radial direction of the first layer (a second rubber layer counted from the tread surface), and a third layer adjacent to inside in a radial direction of the second layer (a third rubber layer counted from the tread surface). The first layer typically corresponds to a cap tread. The second layer and the third layer typically correspond to a base tread or an under tread. Moreover, as long as the object of the present invention is achieved, one or more rubber layers may be further provided between the third layer and an outer layer of a belt.

FIG. 1 is an enlarged cross-sectional view schematically showing a part of a tread of a tire. In FIG. 1, a vertical direction is a tire radial direction, a horizontal direction is a tire width direction, and a direction perpendicular to a paper surface is a tire circumferential direction.

The tread has circumferential grooves 1 continuously extending in a tire circumferential direction. The circumferential groove 1 may extend linearly along the circumferential direction or may extend in a zigzag shape along the circumferential direction.

A groove depth H of the circumferential groove 1 can be calculated by a distance between an extension line 4 of a land part 2 and an extension line 5 of the deepest part of the groove bottom of the circumferential groove 1. Besides, the groove depth H can be, for example, when there are a plurality of circumferential grooves 1, a distance between the extension line 4 of the land part 2 and the extension line 5 of the deepest part of the groove bottom of the circumferential groove 1 (a circumferential groove 1 on the left side in FIG. 1) having the deepest groove depth among the plurality of circumferential grooves 1.

In the present invention, as shown in FIG. 1, the tread comprises a first layer 6 whose outer surface forms a tread surface 3, a second layer 7 adjacent to inside in a radial direction of the first layer 6, and a third layer 8 adjacent to inside in a radial direction of the second layer 7. In one of the circumferential grooves 1 shown on the left side of FIG. 1, the deepest part of the groove bottom of the circumferential groove 1 is formed so as to be located inside in the tire radial direction with respect to the outermost side of the second layer 7. Specifically, the second layer 7 has a recessed part which is recessed inside in the tire radial direction with respect to the outer surface, and a part of the first layer 6 is formed in the recessed part of the second layer 7 with a predetermined thickness. The circumferential groove 1 is formed so as to go beyond the outer surface of the second layer 7 and enter inside of the recessed part of the second layer 7. Besides, the circumferential groove 1 may be formed at a groove depth that does not reach the outermost side of the second layer 7, such that the circumferential groove 1 shown on the right side of FIG. 1 does.

In FIG. 1, a double-headed arrow t1 is a thickness of the first layer 6, a double-headed arrow t2 is a thickness of the second layer 7, and a double-headed arrow t3 is a thickness of the third layer 8. In FIG. 1, a middle point in a tire width direction of the land part 2 is represented as a symbol P. A straight line represented by a symbol N is a straight line (a normal line) that passes through the point P and is perpendicular to a tangent plane at this point P. In the present invention, the thicknesses t1, t2, and t3 are measured along the normal line N drawn from the point P on the tread surface at a position where no grooves exist, in the cross section of FIG. 1.

In the present invention, a total thickness of the tread is not particularly limited, but is preferably 30 mm or less, more preferably 25 mm or less, further preferably 20 mm or less, particularly preferably 15 mm or less. Moreover, the total thickness of the tread is more preferably 3.0 mm or more, more preferably 5.0 mm or more, further preferably 7.0 mm or more.

In the present invention, a thickness of each layer of the tread is not particularly limited, but is preferably 0.5 mm or more, more preferably 1.0 mm or more, further preferably 1.5 mm or more, particularly preferably 2.0 mm or more. Moreover, the thickness of each layer of the tread is preferably 10.0 mm or less, more preferably 9.0 mm or less, further preferably 8.0 mm or less.

A ratio t1/H of the thickness t1 (mm) of the first layer 6 to the groove depth H (mm) of the circumferential groove is preferably less than 2.00, more preferably less than 1.50, further preferably less than 1.00, further preferably less than 0.95, further preferably less than 0.90, further preferably less than 0.85, particularly preferably less than 0.80, from the viewpoint of effects of the present invention. Moreover, t1/H is preferably more than 0.20, more preferably more than 0.30, further preferably more than 0.40, particularly preferably more than 0.50.

A ratio |X₁ - X₂| / (t1/H) of |X₁ - X₂| to t1/H is preferably 0.40 or less, more preferably 0.30 or less, further preferably 0.25 or less, further preferably 0.20 or less, particularly preferably 0.15 or less, from the viewpoint of the effects of the present invention. Moreover, a lower limit value of |X₁ - X₂| / (t1/H) is not particularly limited, but can be, for example, more than 0, 0.001 or more, or 0.01 or more.

Besides, in the present invention, the groove depth H of the circumferential groove and the thickness of each rubber layer of the tread are values measured after dividing tires into two by a plane including a tire meridian and rim-assembling the obtained one into a standardized rim. Moreover, the total thickness of the tread is calculated by a shortest distance between the tread surface and the outer layer of the belt.

As the neutron scattering measurement according to the present invention, Small-Angle Neutron Scattering (SANS) (scattering angle: usually 10 degrees or less) measurement is used by which a target rubber sample is irradiated with neutron rays to measure a scattering intensity. Besides, in Small-Angle Neutron Scattering, a structural information of a substance can be obtained by irradiating the substance with neutron rays to measure a neutron ray with a small scattering angle, among the scattering neutron rays, which allows for analysis of an ordered structure at several nanometer level, such as a microphase-separated structure of a polymer material.

In the SANS measurement, a method utilizing a known magnetic structure or deuteration method is used. When the deuterium method is adopted, for example, the polymer material can be swollen with a deuterated solvent, and the polymer material in an equilibrium state in the deuterated solvent is irradiated with neutron rays, to measure a scattering intensity. Here, examples of the deuterated solvent for swelling the polymer material include a deuterated water, deuterated hexane, deuterated toluene, deuterated chloroform, deuterated methanol, deuterium DMSO ((D₃C)₂S=O), deuterated tetrahydrofuran, deuterated acetonitrile, deuterated dichloromethane, deuterated benzene, deuterated N, N-dimethylformamide, and the like.

The neutron ray used for neutron scattering measurement can be obtained by using a beamline SANS-J in a JRR-3 research reactor owned by Japan Atomic Energy Agency.

A neutron flux intensity (neutrons/cm²/s) of the above-described neutron ray is 10³ or more, more preferably 10⁴ or more, from the viewpoint that a neutron scattering profile with a high S/N ratio can be obtained. An upper limit is not particularly limited, but it is preferable to use a neutron flux intensity to an extent that does not cause radiation damage.

The neutron rays scattered in the SANS measurement are detected with a neutron ray detection device, and images are generated with an image processing device or the like using neutron ray detection data from the neutron ray detection device. As the neutron ray detection device, a known two-dimensional detector or one-dimensional detector can be used, and as the image processing device, a known device capable of generating a neutron ray scattering image can be used, which may be appropriately selected.

A rubber sample to be subjected to the neutron scattering measurement according to the present invention is cut out so as to include the interface of each rubber layer with 20 mm in length × 20 mm in width × 20 mm in thickness so that a tire circumferential direction becomes a long side, from inside of a rubber layer of a tread part of a tire. It is preferable that thicknesses of adjacent rubber layers in each rubber sample become equal.

A "0°C tan δ" in the present invention refers to a loss tangent tan δ under a condition of a temperature at 0°C, a frequency of 10 Hz, and an elongational strain of 2.5%. A 0°C tan δ of the rubber composition of the first rubber layer (first layer) counted from the tread surface is preferably 0.40 or more, more preferably 0.45 or more, further preferably 0.50 or more, particularly preferably 0.55 or more, from the viewpoint of the effects of the present invention. Moreover, a 0°C tan δ of the rubber composition of the second rubber layer (second layer) counted from the tread surface is preferably 0.30 or more, more preferably 0.35 or more, further preferably 0.40 or more, particularly preferably 0.45 or more. On the other hand, the 0°C tan δ of the rubber composition of each layer of the tread is preferably 2.00 or less, more preferably 1.50 or less, further preferably 1.20 or less, particularly preferably 0.90 or less, from the viewpoint of fuel efficiency. Besides, a value of the 0°C tan δ of the rubber composition of the first layer is preferably larger than a value of the 0°C tan δ of the rubber composition of the second layer. A difference between the 0°C tan δ of the rubber composition of the first layer and the 0°C tan δ of the rubber composition of the second layer is preferably 0.02 or more, more preferably 0.04 or more, further preferably 0.06 or more, particularly preferably 0.08 or more.

A "30°C tan δ" in the present invention refers to a loss tangent tan δ under a condition of a temperature at 30°C, a frequency of 10 Hz, and an elongational strain of 2.5%. A 30°C tan δ of the rubber composition of the first layer is preferably 0.10 or more, more preferably 0.12 or more, further preferably 0.14 or more, further preferably 0.16 or more, particularly preferably 0.18 or more. When the 30°C tan δ of the rubber composition of the first layer is set within the above-described ranges, grip performance can be obtained. Moreover, the 30°C tan δ of the rubber composition of the second layer is preferably 0.08 or more, more preferably 0.10 or more, further preferably 0.12 or more, particularly preferably 0.14 or more. On the other hand, the 30°C tan δ of the rubber composition of each layer of the tread is preferably 0.75 or less, more preferably 0.70 or less, further preferably 0.65 or less, particularly preferably 0.60 or less, from the viewpoint of fuel efficiency. Besides, a value of the 30°C tan δ of the rubber composition of the first layer is preferably larger than a value of the 30°C tan δ of the rubber composition of the second layer. A difference between the 30°C tan δ of the rubber composition of the first layer and the 30°C tan δ of the rubber composition of the second layer is preferably 0.01 or more, more preferably 0.02 or more, further preferably 0.03 or more, particularly preferably 0.04 or more.

An elongation at break (EB) in the present invention refers to an elongation at break (elongation at cutting) measured under a condition of a tensile speed of 3.3 mm/sec in an atmosphere of 23°C according to JIS K 6251: 2017. The EB of the rubber composition of the first layer is preferably 460% or more, more preferably 470% or more, further preferably 480% or more, particularly preferably 490% or more, from the viewpoint of maintaining smoothness of a surface. Moreover, the EB of the rubber composition of the second layer is preferably 410% or more, more preferably 420% or more, further preferably 430% or more, particularly preferably 440% or more. Besides, an upper limit value of the EB of the rubber composition of each layer of the tread is not particularly limited.

A "0°C E*" in the present invention refers to a complex elastic modulus E* under a condition of a temperature at 0°C, a frequency of 10 Hz, and an elongational strain of 2.5%. A 0°C E* of the rubber composition of the first layer is preferably 3.0 MPa or more, more preferably 3.5 MPa or more, further preferably 4.0 MPa or more, particularly preferably 4.5 MPa or more, from the viewpoint of anchor friction. Moreover, a 0°C E* of the rubber composition of the second layer is preferably 2.0 MPa or more, more preferably 2.5 MPa or more, further preferably 3.0 MPa or more, particularly preferably 3.5 MPa or more, from the viewpoint of anchor friction. On the other hand, a 0°C E* of the rubber composition of each layer of the tread is preferably 20 MPa or less, more preferably 15 MPa or less, further preferably 10 MPa or less, from the viewpoint of a road surface followability. Besides, a value of the 0°C E* of the rubber composition of the first layer is preferably larger than a value of the 0°C E* of the rubber composition of the second layer. A difference between the 0°C E* of the rubber composition of the first layer and the 0°C E* of the rubber composition of the second layer is preferably 0.2 MPa or more, more preferably 0.4 MPa or more, further preferably 0.6 MPa or more, particularly preferably 0.8 MPa or more.

Besides, the 0°C tan δ, the 30°C tan δ, the EB, and the 0°C E* of the rubber composition of the present invention can be appropriately adjusted depending on types and compounding amounts of rubber components, fillers, plasticizers, etc. which will be described later.

A glass transition temperature (Tg) in the present invention refers to a tan δ peak temperature measured by the following method. That is, for a rubber test piece (for example, length 20 mm × width 4 mm × thickness 1 mm) produced by being cut out from inside of a rubber layer of a tread part of each test tire so that a tire circumferential direction is on a long side, a temperature distribution curve of tan δ is measured under a condition of a frequency of 10 Hz and an elongational strain of 2.5%, using a dynamic viscoelasticity evaluation device (EPLEXOR series manufactured by gabo Systemtechnik GmbH), and a temperature corresponding to the largest tan δ value in the obtained temperature distribution curve (tan δ peak temperature) shall be defined as a glass transition temperature (Tg) in the present invention. A Tg of the rubber composition of the first layer is preferably -25°C or higher, more preferably -24°C or higher, further preferably -23°C or higher, further preferably -22°C or higher, particularly preferably -21°C or higher. When the Tg is -25°C or higher, a loss tangent tan δ in a temperature region higher than the Tg tends to become higher as compared with a case where the temperature is lower than -25°C, which improves wet grip performance. Moreover, a Tg of the rubber composition of the second layer is preferably -40°C or higher, more preferably -35°C or higher, further preferably -32°C or higher. Besides, an upper limit value of the Tg of the rubber composition of each layer of the tread is, but not particularly limited to, preferably 20°C or lower, more preferably 15°C or lower, further preferably 10°C or lower. Besides, the Tg of each rubber layer can be appropriately adjusted depending on types and compounding amounts of the above-described rubber components, fillers, plasticizers, and the like.

In the present invention, unless otherwise specified, a dimension and an angle of each member of the tire are measured in a state where the tire is incorporated into a standardized rim and is filled with air so as to have a standardized internal pressure. At the time of measurement, no load is applied to the tire. Besides, in the present invention, the "standardized rim" is a rim defined for each tire, in a standard system including a standard on which the tire is based, by the standard. For example, it is a "standard rim" in JATMA, "Design Rim" in TRA, or "Measuring Rim" in ETRTO. Besides, in the present invention, the "standardized internal pressure" is an air pressure defined for each tire by the standard, i.e., a "maximum air pressure" in JATMA, a maximum value described in Table "TIRE LOAD LIMITS AT VARIOUS COLD INFLATION PRESSURES" in TRA, or "INFLATION PRESSURE" in ETRTO.

A procedure for producing a tire that is one embodiment of the present invention will be described in detail below. However, the following descriptions are illustrative for explaining the present invention, and are not intended to limit the technical scope of the present invention to this description range only. Besides, in the present invention, a numerical range identified with "to" means to include the numerical values of both ends.

### <Rubber component>

The rubber composition of each layer of the tread according to the present invention comprises at least one selected from the group consisting of an isoprene-based rubber, a styrene-butadiene rubber (SBR), and a butadiene rubber (BR) as rubber components. Each rubber component of the first layer and the second layer preferably comprises a SBR, more preferably comprises a SBR and a BR, and may be a rubber component consisting only of a SBR and a BR. The rubber component of the third layer preferably comprises an isoprene-based rubber, more preferably comprises an isoprene-based rubber and a BR, and may be a rubber component consisting only of an isoprene-based rubber and a BR.

### (Isoprene-based rubber)

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber (preferably the natural rubber, more preferably the non-modified natural rubber (NR)) when compounded in the rubber components of the first layer and the second layer is preferably 50% by mass or less, more preferably 40% by mass or less, further preferably 30% by mass or less, particularly preferably 20% by mass or less. Moreover, a lower limit value of the content of the isoprene-based rubber when compounded can be, but not particularly limited to, for example, 1% by mass or more, 3% by mass or more, 5% by mass or more, 10% by mass or more, or 15% by mass or more. A content of the isoprene-based rubber in the rubber component when compounded in the rubber component of the rubber layer inside in the tire radial direction with respect to the third layer can be, but not particularly limited to, for example, 10% by mass or more, 30% by mass or more, 40% by mass or more, 50% by mass or more, or 60% by mass or more.

### (SBR)

The SBR is not particularly limited, examples of which include unmodified solution-polymerized SBR (S-SBR) and emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, an E-SBR and a modified SBR are preferable. Furthermore, hydrogenated ones of these SBRs (hydrogenated SBRs) and the like can also be used. These SBRs may be used alone, or two or more thereof may be used in combination.

As the SBR, an oil-extended SBR can be used, or a non-oil-extended SBR can be used. An extending oil amount of the SBR, i.e., a content of an extending oil contained in the SBR when used is preferably 10 to 50 parts by mass based on 100 parts by mass of a rubber solid content of the SBR.

As S-SBRs that can be used in the present invention, those commercially available from JSR Corporation, Sumitomo Chemical Co., Ltd., Ube Industries, Ltd., Asahi Kasei Corporation, ZS Elastomer Co., Ltd., etc. can be used.

As the modified SBRs, those modified at a main chain and/or a terminal thereof with a modifying agent or those modified with a polyfunctional modifying agent such as, for example, a tin tetrachloride and a silicon tetrachloride and partially having a branched structure may be used, but a SBR modified with a modifying agent having a functional group interacting with silica at a main chain and/or a terminal thereof (a modified BR for silica) is preferable. In particular, it is preferable that the first layer and/or the second layer comprises a modified SBR.

Examples of the above-described functional group interacting with silica include, for example, an amino group, an amide group, an alkoxysilyl group, an isocyanate group, an imino group, an imidazole group, an urea group, an ether group, a carbonyl group, an oxycarbonyl group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydrocarbon group, a hydroxyl group, an oxy group, an epoxy group, and the like. Besides, these functional groups may have a substituent. Among them, an amino group, an epoxy group, a hydroxyl group, an alkoxy group, and an alkoxysilyl group are preferable, and an amino group and an alkoxysilyl group are more preferable, from the viewpoint of improving dispersibility of silica.

A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less, more preferably 55% by mass or less, further preferably 50% by mass or less, from the viewpoints of temperature dependence of grip performance and blow resistance. Besides, in the present invention, the styrene content of the SBR is calculated by ¹H-NMR measurement.

A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, in the present invention, the vinyl content of the SBR (1 ,2-bond butadiene unit amount) is measured by infrared absorption spectrometry.

A weight-average molecular weight (Mw) of the SBR is preferably 200,000 or more, more preferably 250,000 or more, further preferably 300,000 or more, from the viewpoint of wet grip performance. Moreover, the weight-average molecular weight is preferably 2,000,000 or less, more preferably 1,800,000 or less, further preferably 1,500,000 or less, from the viewpoint of cross-linking uniformity. Besides, in the present invention, the weight-average molecular weight of the SBR can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A content of the SBR when compounded in the rubber components of the first layer and the second layer is preferably 20% by mass or more, more preferably 25% by mass or more, further preferably 30% by mass or more, particularly preferably 35% by mass or more, from the viewpoint of chipping resistance. Moreover, it is preferably 90% by mass or less, more preferably 85% by mass or less, further preferably 80% by mass or less, from the viewpoint of abrasion resistance. Besides, a content of the SBR when compounded in the rubber component of the rubber layer inside in the tire radial direction with respect to the third layer is not particularly limited.

### (BR)

The BR is not particularly limited, and those common in the tire industry can be used such as, for example, a BR having a cis content of less than 50% by mass (a low cis BR), a BR having a cis content of 90% by mass or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

As the high cis BR, for example, those commercially available from Zeon Corporation, Ube Industries, Ltd., JSR Corporation, etc. can be used. When the high cis BR is compounded, low temperature characteristics and abrasion resistance can be improved. The cis content is preferably 95% by mass or more, more preferably 96% by mass or more, further preferably 97% by mass or more, particularly preferably 98% by mass or more. Besides, in the present invention, the cis content (cis-1 ,4-bond butadiene unit amount) is a value calculated by infrared absorption spectrometry.

As the rare-earth-based BR, those which are synthesized using a rare-earth element-based catalyst, have a vinyl content of preferably 1.8 mol% or less, more preferably 1.0 mol% or less, further preferably 0.8% mol or less and a cis content of preferably 95% by mass or more, more preferably 96% by mass or more, further preferably 97% by mass or more, particularly preferably 98% by mass or more, can be used. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such SPB-containing BR, those commercially available from Ube Industries, Ltd., etc. can be used.

Examples of the modified BR include those obtained by adding a tin compound after polymerizing 1,3-butadiene by a lithium initiator, and further those in which the terminal of the modified BR molecule has tin-carbon bond (a tin-modified BR), a butadiene rubber modified with a modifying agent having the above-described functional group interacting with silica at a main chain and/or a terminal thereof (a modified BR for silica), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A content of the BR when compounded in the rubber component of each layer of the tread is preferably 50% by mass or less, more preferably 45% by mass or less, further preferably 40% by mass or less, particularly preferably 35% by mass or less, from the viewpoint of chipping resistance. Moreover, a lower limit value of the content of the BR when compounded can be, but not particularly limited to, for example, 1% by mass or more, 3% by mass or more, 5% by mass or more, 10% by mass or more, or 15% by mass or more.

### (Other rubber components)

As the rubber components according to the present invention, rubber components other than the above-described isoprene-based rubbers, SBRs, and BRs may be compounded. As other rubber components, a crosslinkable rubber component commonly used in the tire industry can be used, examples of which include a diene-based rubber other than an isoprene-based rubber, a SBR and a BR such as a styrene-isoprene rubber (SIR), a styrene-isoprene-butadiene rubber (SIBR), a chloroprene rubber (CR), and an acrylonitrile-butadiene rubber (NBR); a non-diene-based rubber such as a butyl rubber (IIR), a halogenated butyl rubber, an ethylene propylene rubber, a polynorbornene rubber, a silicone rubber, a polyethylene chloride rubber, a fluororubber (FKM), an acryl rubber (ACM), and a hydrin rubber, and the like. These other rubber components may be used alone, or two or more thereof may be used in combination. The rubber component according to the present invention comprises preferably 80% by mass or more, more preferably 90% by mass or more, further preferably 95% by mass or more, particularly preferably 98% by mass or more of a diene-based rubber, or may be a rubber component consisting only of a diene-based rubber. Moreover, besides the above-described rubber components, it may or may not comprise a known thermoplastic elastomer.

### <Filler>

For the rubber composition of each layer of the tread according to the present invention, a filler comprising carbon black and/or silica is appropriately used. The rubber compositions of the first layer and the second layer preferably comprise silica as a filler, and more preferably comprise carbon black and silica. The rubber composition of the rubber layer inside in the tire radial direction with respect to the third layer preferably comprises carbon black as a filler.

### (Carbon black)

As carbon black, those common in the tire industry can be appropriately used, examples of which include, for example, GPF, FEF, HAF, ISAF, SAF, and the like. These carbon black may be used alone, or two or more thereof may be used in combination.

A nitrogen adsorption specific surface area (N₂SA) of carbon black is preferably 20 m²/g or more, more preferably 40 m²/g or more, further preferably 60 m²/g or more, particularly preferably 80 m²/g or more, from the viewpoint of reinforcing property. Moreover, it is preferably 200 m²/g or less, more preferably 170 m²/g or less, further preferably 140 m²/g or less, from the viewpoints of fuel efficiency and processability. Besides, the N₂SA of carbon black is a value measured according to JIS K 6217-2: "Carbon black for rubber industry-Fundamental characteristics-Part 2: Determination of specific surface area-Nitrogen adsorption methods-Single-point procedures".

A content of carbon black when compounded in the rubber compositions of the first layer and the second layer based on 100 parts by mass of the rubber component is preferably 1 part by mass or more, more preferably 3 parts by mass or more, further preferably 5 parts by mass or more, from the viewpoints of abrasion resistance and wet grip performance. Moreover, it is preferably 50 parts by mass or less, more preferably 35 parts by mass or less, further preferably 20 parts by mass or less, particularly preferably 10 parts by mass or less, from the viewpoint of fuel efficiency. A content of carbon black when compounded in the rubber composition of the rubber layer inside in the tire radial direction with respect to the third layer based on 100 parts by mass of the rubber component is preferably 10 parts by mass or more, more preferably 20 parts by mass or more, further preferably 30 parts by mass or more, from the viewpoint of abrasion resistance. Moreover, it is preferably 80 parts by mass or less, more preferably 70 parts by mass or less, further preferably 60 parts by mass or less, from the viewpoint of fuel efficiency.

### (Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone, or two or more thereof may be used in combination.

A nitrogen adsorption specific surface area (N₂SA) of silica is preferably 120 m²/g or more, more preferably 140 m²/g or more, further preferably 160 m²/g or more, from the viewpoint of chipping resistance. Moreover, it is preferably 350 m²/g or less, more preferably 300 m²/g or less, further preferably 250 m²/g or less, from the viewpoints of fuel efficiency and processability. Besides, the N₂SA of silica in the present invention is a value measured by a BET method according to ASTM D3037-93.

A content of silica when compounded in the rubber compositions of the first layer and the second layer based on 100 parts by mass of the rubber component is preferably 20 parts by mass or more, more preferably 40 parts by mass or more, further preferably 50 parts by mass or more, particularly preferably 60 parts by mass or more, from the viewpoint of wet grip performance. Moreover, it is preferably 130 parts by mass or less, more preferably 120 parts by mass or less, further preferably 110 parts by mass or less, from the viewpoint of abrasion resistance. Besides, a content of silica in the rubber component when compounded in the rubber composition of the rubber layer inside in the tire radial direction with respect to the third layer is not particularly limited.

A total content of silica and carbon black based on 100 parts by mass of the rubber component is preferably 40 parts by mass or more, more preferably 50 parts by mass or more, further preferably 60 parts by mass or more, from the viewpoint of chipping resistance. Moreover, it is preferably 160 parts by mass or less, more preferably 140 parts by mass or less, further preferably 120 parts by mass or less, particularly preferably 110 parts by mass or less, from the viewpoints of fuel efficiency and elongation at break.

A ratio of silica to a total content of silica and carbon black in the rubber compositions of the first layer and the second layer is preferably 60% by mass or more, more preferably 70% by mass or more, further preferably 80% by mass or more, particularly preferably 85% by mass or more, from the viewpoint of a balance of fuel efficiency, wet grip performance, and chipping resistance. Besides, a content ratio of silica to carbon black in the rubber composition of the rubber layer inside in the tire radial direction with respect to the third layer is not particularly limited, but a ratio of carbon black to the total content of silica and carbon black can be, for example, 50% by mass or more, 70% by mass or more, 90% by mass or more, or 100% by mass.

### (Silane coupling agent)

Silica is preferably used in combination with a silane coupling agent. The silane coupling agent is not particularly limited, and a silane coupling agent conventionally used in combination with silica in the tire industry can be used, examples of which include, for example, mercapto-based silane coupling agents described below; sulfide-based silane coupling agents such as bis(3-triethoxysilylpropyl)disulfide and bis(3-triethoxysilylpropyl)tetrasulfide; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxy, and the like. Among them, sulfide-based silane coupling agents and/or mercapto-based silane coupling agents are preferable, and mercapto-based silane coupling agents are more preferable. These silane coupling agents may be used alone, or two or more thereof may be used in combination.

It is preferable that the mercapto-based silane coupling agent is a compound represented by the following formula (1) and/or a compound comprising a bond unit A represented by the following formula (2) and a bond unit B represented by the following formula (3). 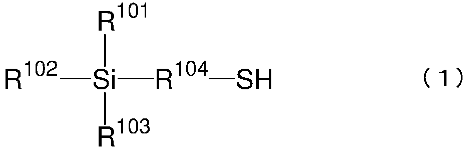 (wherein, R¹⁰¹, R¹⁰², and R¹⁰³ each independently represents an alkyl having 1 to 12 carbon atoms, an alkoxy having 1 to 12 carbon atoms, or a group represented by -O-(R¹¹¹-O)_{z}-R¹¹² (z pieces of R¹¹¹ each independently represents a divalent hydrocarbon group having 1 to 30 carbon atoms; R¹¹² represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and R¹⁰⁴ represents an alkylene having 1 to 6 carbon atoms.) 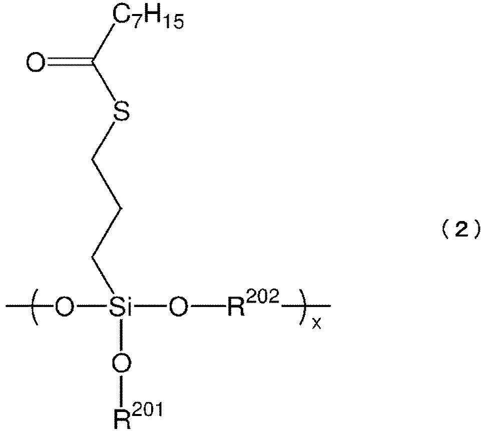 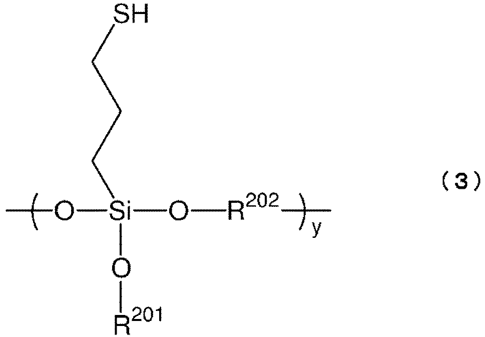 (wherein, x represents an integer of 0 or more; y represents an integer of 1 or more; R²⁰¹ represents hydrogen atom, an alkyl having 1 to 30 carbon atoms, an alkenyl having 2 to 30 carbon atoms, or an alkynyl having 2 to 30 carbon atoms (the alkyl, the alkenyl, and the alkynyl may be optionally substituted with a halogen atom, hydroxyl or carboxyl); and R²⁰² represents an alkylene having 1 to 30 carbon atoms, an alkenylene having 2 to 30 carbon atoms, or an alkynylene having 2 to 30 carbon atoms; where R²⁰¹ and R²⁰² may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (4) (Si363 manufactured by Evonik Degussa GmbH), and the like, and the compound represented by the following formula (4) can be appropriately used. They may be used alone, or two or more thereof may be used in combination.

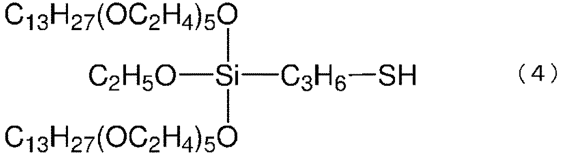

Examples of the compound comprising the bond unit A represented by the formula (2) and the bond unit B represented by the formula (3) include, for example, those manufactured and sold by Momentive Performance Materials, etc. They may be used alone, or two or more thereof may be used in combination.

A content of the silane coupling agent based on 100 parts by mass of the rubber component (a total amount of a plurality of silane coupling agents when used in combination) is preferably 0.5 parts by mass or more, more preferably 1.0 part by mass or more, further preferably 2.0 parts by mass or more, particularly preferably 4.0 parts by mass or more, from the viewpoint of enhancing dispersibility of silica. Moreover, it is preferably 20 parts by mass or less, more preferably 12 parts by mass or less, further preferably 10 parts by mass or less, particularly preferably 9.0 parts by mass or less, from the viewpoint of preventing deterioration of abrasion resistance.

A content of the silane coupling agent based on 100 parts by mass of silica (a total amount of a plurality of silane coupling agents when used in combination) is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

As a filler, other fillers may further be used in addition to carbon black and silica. Such filler is not particularly limited, and any filler commonly used in this field such as, for example, aluminum hydroxide, alumina (aluminum oxide), calcium carbonate, magnesium sulfate, talc, and clay can be used. These fillers may be used alone, or two or more thereof may be used in combination.

### (Other compounding agents)

The rubber composition of each layer of the tread according to the present invention can appropriately comprise compounding agents conventionally and generally used in the tire industry, for example, a plasticizer, wax, processing aid, stearic acid, zinc oxide, an antioxidant, a vulcanizing agent, a vulcanization accelerator, and the like, in addition to the above-described components.

The rubber composition of each layer of the tread according to the present invention preferably comprises a plasticizer. Examples of the plasticizer include, for example, a resin component, oil, a liquid rubber, an ester-based plasticizer, and the like.

The resin component is not particularly limited, examples of which include a petroleum resin, a terpene-based resin, a rosin-based resin, a phenol-based resin, and the like, which are commonly used in the tire industry. These resin components may be used alone, or two or more thereof may be used in combination.

In the present invention, a "C5-based petroleum resin" refers to a resin obtained by polymerizing a C5 fraction. Examples of the C5 fraction include, for example, a petroleum fraction having 4 to 5 carbon atoms such as cyclopentadiene, pentene, pentadiene, and isoprene. As the C5-based petroleum resin, a dicyclopentadiene resin (DCPD resin) is appropriately used.

In the present invention, an "aromatic-based petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

In the present invention, a "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, those commercially available from, for example, Tosoh Corporation, Zibo Luhua Hongjin New Material Co., Ltd., etc. can be appropriately used.

Examples of the terpene-based resin include a polyterpene resin consisting of at least one selected from terpene compounds such as α-pinene, β-pinene, limonene, and a dipentene; an aromatic-modified terpene resin made from the terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, α-methylstyrene, vinyltoluene, a divinyltoluene, and the like. Examples of the phenol-based compound used as a raw material for the terpene phenol resin include, for example, phenol, bisphenol A, cresol, xylenol, and the like.

The rosin-based resin is not particularly limited, examples of which include, for example, natural resin rosins such as tall rosin, gum rosin, and wood rosin, rosin-modified resins obtained by modifying them by hydrogenation, disproportionation, dimerization, esterification, or the like, and the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 65°C or higher, further preferably 70°C or higher, from the viewpoint of wet grip performance. Moreover, it is preferably 150°C or lower, more preferably 140°C or lower, further preferably 130°C or lower, from the viewpoints of processability and improvement in dispersibility of a rubber component and a filler. Besides, the softening point in the present invention can be defined as a temperature at which a sphere drops when the softening point specified in JIS K 6220-1 : 2001 is measured with a ring and ball softening point measuring device.

A content of the resin component when compounded in the rubber composition of each layer (particularly the first layer and/or the second layer) of the tread according to the present invention based on 100 parts by mass of the rubber component is preferably 1 part by mass or more, more preferably 3 parts by mass or more, further preferably 5 parts by mass or more, further preferably 10 parts by mass or more, particularly preferably 12 parts by mass or more, from the viewpoint of chipping resistance. Moreover, it is preferably 60 parts by mass or less, more preferably 50 parts by mass or less, further preferably 40 parts by mass or less, particularly preferably 30 parts by mass or less, from the viewpoint of suppressing heat generation.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like.

When the rubber composition comprises the oil, the content thereof is, from the viewpoint of processability, preferably 1 part by mass or more, more preferably 3 parts by mass or more, further preferably 5 parts by mass or more, particularly preferably 7 parts by mass or more based on 100 parts by mass of the rubber component. Moreover, it is preferably 120 parts by mass or less, more preferably 100 parts by mass or less, further preferably 80 parts by mass or less, particularly preferably 60 parts by mass or less, from the viewpoint of abrasion resistance. Besides, in the present invention, the content of oil also includes an amount of oil contained in an oil-extended rubber.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

When the rubber composition comprises the liquid rubber, the content thereof is preferably 1 part by mass or more, more preferably 3 parts by mass or more, further preferably 5 parts by mass or more, particularly preferably 7 parts by mass or more based on 100 parts by mass of the rubber component. Moreover, the content of the liquid rubber is preferably 50 parts by mass or less, more preferably 40 parts by mass or less, further preferably 20 parts by mass or less.

Examples of the ester-based plasticizer include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizer may be used alone, or two or more thereof may be used in combination.

A content of the plasticizer when compounded in the rubber composition of each layer (particularly the first layer and/or the second layer) of the tread according to the present invention based on 100 parts by mass of the rubber component (a total amount of a plurality of plasticizer when used in combination) is preferably 5 parts by mass or more, more preferably 10 parts by mass or more, further preferably 15 parts by mass or more, from the viewpoint of wet grip performance. Moreover, it is preferably 120 parts by mass or less, more preferably 100 parts by mass or less, further preferably 90 parts by mass or less, particularly preferably 80 parts by mass or less, from the viewpoint of processability.

When the rubber composition comprises wax, the content thereof is, from the viewpoint of weather resistance of a rubber, preferably 0.5 parts by mass or more, more preferably 1.0 part by mass or more, further preferably 1.5 parts by mass or more based on 100 parts by mass of the rubber component. Moreover, it is preferably 10.0 parts by mass or less, more preferably 5.0 parts by mass or less, from the viewpoint of preventing whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

When the rubber composition comprises the processing aid, the content thereof is, from the viewpoint of exhibiting an effect of improving processability, preferably 0.5 parts by mass or more, more preferably 1 part by mass or more based on 100 parts by mass of the rubber component. Moreover, it is preferably 10 parts by mass or less, more preferably 8 parts by mass or less, from the viewpoints of abrasion resistance and breaking strength.

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

When the rubber composition comprises the antioxidant, the content thereof is, from the viewpoint of ozone crack resistance of a rubber, preferably 0.5 parts by mass or more, more preferably 1.0 part by mass or more, further preferably 1.5 parts by mass or more based on 100 parts by mass of the rubber component. Moreover, it is preferably 10.0 parts by mass or less, more preferably 5.0 parts by mass or less, from the viewpoints of abrasion resistance and wet grip performance.

When the rubber composition comprises stearic acid, the content thereof is, from the viewpoint of processability, preferably 0.5 parts by mass or more, more preferably 1.0 part by mass or more, further preferably 1.5 parts by mass or more based on 100 parts by mass of the rubber component. Moreover, it is preferably 10.0 parts by mass or less, more preferably 5.0 parts by mass or less, from the viewpoint of vulcanization rate.

When the rubber composition comprises zinc oxide, the content thereof is, from the viewpoint of processability, preferably 0.5 parts by mass or more, more preferably 1.0 part by mass or more, further preferably 1.5 parts by mass or more based on 100 parts by mass of the rubber component. Moreover, it is preferably 10.0 parts by mass or less, more preferably 5.0 parts by mass or less, from the viewpoint of abrasion resistance.

Sulfur is appropriately used as a vulcanizing agent. As sulfur, a powdery sulfur, oil a processing sulfur, a precipitated sulfur, a colloidal sulfur, an insoluble sulfur, a highly dispersible sulfur, and the like can be used.

When the rubber composition comprises the sulfur as a vulcanizing agent, the content thereof is, from the viewpoint of securing a sufficient vulcanization reaction, preferably 0.1 parts by mass or more, more preferably 0.3 parts by mass or more, further preferably 0.5 parts by mass or more based on 100 parts by mass of the rubber component. Moreover, it is preferably 5.0 parts by mass or less, more preferably 4.0 parts by mass or less, further preferably 3.0 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable, and sulfenamide-based vulcanization accelerators are more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-cyclohexyl-2-benzothiazolylsulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof is preferably 1.0 part by mass or more, more preferably 1.5 parts by mass or more based on 100 parts by mass of the rubber component. Moreover, the content of the vulcanization accelerator based on 100 parts by mass of the rubber component is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

The rubber composition of each layer of the tread according to the present invention can be produced, for example, by kneading each of the above-described components using a rubber kneading apparatus such as an open roll and a closed type kneader (Bunbury mixer, kneader, etc.). As the method of producing the rubber composition of each layer of the tread according to the present invention, a production method that can make a crosslinked state of the rubber composition uniform can be adopted as will be described below.

Examples of a preferred method of making the crosslinked state of the rubber composition uniform include, for example, a producing method including a step of starting kneading the rubber component with a sulfur atom-containing vulcanization accelerator before kneading the rubber component with a filler, and then adding the filler to the obtained kneaded product and kneading the mixture.

The sulfur atom-containing vulcanization accelerator refers to a vulcanization accelerator containing a sulfur atom bonded with another molecule by a single bond. As the sulfur atom-containing vulcanization accelerator, those which release an active sulfur and those which do not release the active sulfur exist. However, from the viewpoint of suppressing progress of cross-linking reaction during kneading, those which do not release the active sulfur are preferable.

Since adsorption of the sulfur atom-containing vulcanization accelerator with the filler can be prevented by starting kneading the rubber component with the sulfur atom-containing vulcanization accelerator before kneading the rubber component with the filler, it is considered that the sulfur atom-containing vulcanization accelerator is efficiently dispersed in the rubber component and that the crosslinked state of the rubber composition is made uniform.

Characteristics of the producing method are of starting kneading the rubber component with the sulfur atom-containing vulcanization accelerator before kneading with the filler and of adding the filler and then kneading the mixture at a kneading temperature of preferably 120°C or higher. Any material may be added in any step as long as the requirements described above are satisfied. For example, when the kneading step consists of two steps of a step X and a step F, kneading of the rubber component with the sulfur atom-containing vulcanization accelerator may be started at the early stage of the step X, followed by adding the filler in the middle of the step X and kneading the mixture at the kneading temperature of 120°C or higher, and then conducting the step F. Moreover, for example, when the kneading step consists of three steps of a step X, a step Y, and a step F, kneading of the rubber component with the sulfur atom-containing vulcanization accelerator may be started in the step X, followed by adding the filler in the step Y and kneading the mixture at the kneading temperature of 120°C or higher, and then conducting the step F. Furthermore, as another example of a case of three steps, kneading of the rubber component with the sulfur atom-containing vulcanization accelerator may be started at the early stage of the step X, followed by adding the filler in the middle of the step X and kneading the mixture at the kneading temperature of 120°C or higher, and then conducting the step Y and the step F, or kneading of the rubber component with the sulfur atom-containing vulcanization accelerator may be started at the early stage of the step X, followed by adding the filler in the middle of the step X, further adding a filler in the subsequent step Y, and kneading the mixture at the kneading temperature of 120°C or higher, and then conducting the step F. Besides, remilling may be performed between each step.

The kneading temperature of the rubber component with the sulfur atom-containing vulcanization accelerator is, but not particularly limited to, preferably less than 160°C, more preferably 150°C or lower, from the viewpoint of suppressing progress of cross-linking reaction with the sulfur atom-containing vulcanization accelerator.

Moreover, a kneading time for the rubber component with the sulfur atom-containing vulcanization accelerator before adding the filler to the rubber component is, but not particularly limited to, for example, 10 seconds or more from the viewpoint of improving dispersibility.

The kneading temperature after adding the filler is preferably 170°C or lower from the viewpoint of suppressing an excessive progress of cross-linking reaction.

Moreover, the kneading time after the filler being added to the rubber component and the kneading temperature reaching 120°C is, but not particularly limited to, for example, 2 minutes or more from the viewpoint of improving dispersibility. Besides, the kneading time here is a time from a time point when the filler is added to the rubber component and the kneading temperature reaches 120°C to a time point when the entire kneading step is completed, for example, a time from a time point when the filler is added to the rubber component in the step X and the kneading temperature reaches 120°C to a time point when the step F is completed.

In addition to the above-described methods, examples of the method of making the crosslinked state of the rubber composition uniform include (a) a method of using a modified styrene-butadiene rubber for silica and/or a modified butadiene rubber for silica, (b) a method of using a sulfur-containing oligomer as sulfur (a vulcanizing agent), (c) a method of using a resin having a good dispersibility (an aromatic-modified terpene resin, a coumarone indene resin, etc.) as resin, (d) a method of using a rosin-based resin capable of making a sulfur crosslinking uniform, and (e) a method of using a filler as a silica entity and increasing an amount of the filler (for example, the amount of silica is 95 parts by mass or more, and the filler content in 100% by mass of the total rubber composition is 37% by mass or more), which are performed alone or in combination thereof as appropriate.

Besides, a reason why the crosslinked state of the rubber composition can be made uniform by the methods (a) to (e) is presumed as follows.
(a) When a modified styrene-butadiene rubber for silica and/or a modified butadiene rubber for silica is used, a polymer is bonded with a OH group on the silica surface during kneading, the dispersity of silica is improved, and the polymer and silica are integrated, which is considered to consequently make the crosslinked state of the rubber composition uniform.
(b) When a sulfur-containing oligomer is used, the oligomer has a high affinity with the polymer and has a molecular weight close to that of the polymer, so that it is uniformly taken inside the polymer to form a sulfur element and also a sulfur-accelerator-zinc-fatty acid complex, allowing for formation of a uniform crosslinking between polymers, which is therefore considered to make the crosslinked state of the rubber composition uniform.
(c) When a resin having a good dispersibility is used, the sulfur element can approach a diene bonding part without the resin blocking the diene bonding part of the polymer, which is therefore considered to make the crosslinked state of the rubber composition uniform.
(d) When a rosin-based resin is used, a carboxyl group (-COOH) of the rosin adsorbs sulfur and the sulfur element can be uniformly delivered into the polymer, which is therefore considered to make the crosslinked state of the rubber composition uniform.
(e) When a filler is used as a silica entity and an amount of the filler is increased, the filler has an effect of crushing a polymer mass, self-aggregation of polymers is reduced, and a volume ratio of the polymer to the filler becomes closer, which is therefore considered to make the crosslinked state of the rubber composition uniform.

In the methods (a) to (e), the kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

The kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes. The vulcanization condition is not particularly limited. Examples of vulcanization include, for example, a method of vulcanizing at 150 to 200°C for 10 to 30 minutes.

### [Tire]

The tire according to the present invention comprises a tread, the tread comprising n (n represents an integer of 3 or more) rubber layers, and may be a pneumatic tire or a non-pneumatic tire. Moreover, examples of the pneumatic tire include a tire for a passenger car, a tires for a truck/bus, a tire for a two-wheeled vehicle, a high-performance tire, and the like, and particularly, it is appropriately used as a tire for a passenger car. Besides, the tire for a passenger car in the present invention is a tire on the premise that it is mounted on a car running on four wheels and refers to one having the maximum load capacity of 1000 kg or less. Moreover, the high-performance tire in the present invention is a tire having a particularly excellent grip performance and is a concept including a racing tire used for a racing vehicle.

The tire comprising a tread, the tread comprising n (n represents an integer of 3 or more) rubber layers, can be produced by a usual method using the above-described rubber compositions. That is, the tire can be produced by extruding an unvulcanized rubber composition, obtained by compounding each of the above-described components based on the rubber component as necessary, into a shape of each layer with an extruder equipped with a mouthpiece having a predetermined shape, attaching it together with other tire members on a tire forming machine, and molding them by a usual method to form an unvulcanized tire, followed by heating and pressurizing this unvulcanized tire in a vulcanizing machine.

### EXAMPLE

Although the present invention will be described based on Examples, it is not limited to Examples.

Various chemicals used in Examples and Comparative examples are collectively shown below.
NR: TSR20
SBR1: SBR1502 manufactured by JSR Corporation (an unmodified E-SBR, styrene content: 23.5% by mass, vinyl content: 18 mol%, Mw: 500,000)
SBR2: Modified SBR for silica produced in Production example 1 below (styrene content: 27% by mass, vinyl content: 53 mol%, Mw: 400,000)
BR: BR150B manufactured by Ube Industries, Ltd. (an unmodified BR, cis content: 97% by mass, Mw: 440,000)
Silica: Ultrasil VN3 manufactured by Evonik Degussa GmbH (N₂SA: 175 m²/g)
Carbon black: N220 manufactured by Cabot Japan K.K. (N₂SA: 114 m²/g)
Silane coupling agent: NXT manufactured by Momentive Performance Materials (a mercapto-based silane coupling agent)
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac RD manufactured by Ouchi Shinko Chemical Industry Co., Ltd. (poly(2,2,4-trimethyl-1,2-dihydroquinoline))
Wax: SUNNOC N manufactured by Ouchi Shinko Chemical Industry Co., Ltd.
Oil: Diana Process oil PA32 manufactured by Idemitsu Kosan Co., Ltd.
Resin component 1: YS resin TO-125 manufactured by Yasuhara Chemical Co., Ltd. (an aromatic-modified terpene resin, softening point: 125°C)
Resin component 2: HARIESTER P manufactured by Harima Chemicals Group, Inc. (an rosin-modified pentaerythritol ester, softening point: 102°C)
Stearic acid: Bead stearic acid "CAMELLIA" manufactured by NOF CORPORATION
Zinc oxide: Zinc oxide No. 2 manufactured by Mitsui Mining & Smelting Co., Ltd.
Sulfur: Powdered sulfur manufactured by Karuizawa Sulfur Co, Ltd.
Vulcanization accelerator: Nocceler CZ manufactured by Ouchi Shinko Chemical Industry Co., Ltd. (N-cyclohexyl-2-benzothiazolylsulfenamide (CBS))

### (Production example 1)

In a nitrogen atmosphere, 20.8 g of 3-(N,N-dimethylamino) propyltrimethoxysilane (manufactured by AZmax.co) was added to a 250 mL volumetric flask, and anhydrous hexane (manufactured by KANTO CHEMICAL CO., INC.) was further added for a total amount of 250 mL, to prepare a terminal-modifying agent. Next, 18 L of n-hexane, 540 g of styrene (manufactured by KANTO CHEMICAL CO., INC.), 1460 g of butadiene, and 17 mmol of tetramethylethylenediamine were added to a nitrogen-substituted 30 L pressure-resistant container, the temperature was raised to 40°C, and 3.5 ml of a 0.4 mol/L silicon tetrachloride/hexane solution was added to the mixture, which was then stirred for 30 minutes. Then, 10.5 mL of butyllithium was added, the temperature was raised to 50°C, and the mixture was stirred for 3 hours. Then, 30 mL of the above-described terminal-modifying agent was added, and the mixture was stirred for 30 minutes. 2 mL of methanol (manufactured by KANTO CHEMICAL CO., INC.), in which 0.2 g of 2,6-tert-butyl-p-cresol (manufactured by Ouchi Shinko Chemical Industry Co., Ltd.) was dissolved, was added to a reaction solution, and then the reaction solution was placed in a stainless steel container comprising 18 L of methanol to recover an aggregate. The obtained aggregate was dried under reduced pressure for 24 hours to obtain a SBR2.

### (Examples and Comparative examples)

According to the compounding formulations shown in Table 1, various chemicals shown in the step X were kneaded with a 1.7 L Banbury mixer at a discharge temperature of 100°C for 5.0 minutes (step X). Next, the kneaded product in the step X and various chemicals shown in the step Y were kneaded with the 1.7 L Banbury mixer at 140°C or higher for 30 seconds and further kneaded at a discharge temperature of 150°C for 3 minutes (step Y). Then, the kneaded product in the step Y and various chemicals shown in the step F were kneaded using an open roll at about 80°C according to the kneading time shown in Table 1 (step F) to obtain an unvulcanized rubber composition. The obtained unvulcanized rubber composition was molded into each shape of the first layer (thickness: 3.0 mm), the second layer (thickness: 2.0 mm), the third layer (thickness: 2.0 mm), and the fourth layer (thickness: 0.5 mm) of the tread, and attached together with other tire members, preparing an unvulcanized tire, followed by vulcanized at 170°C to obtain each test tire described in Table 2 (size: 205/65R15, rim: 15 × 6JJ, internal pressure: 230 kPa). Besides, a groove depth (deepest part) of a circumferential groove was set to 4.0 mm.

### <SANS measurement>

A rubber sample including interfaces of the first layer and the second layer, a rubber sample including interfaces of the second layer and the third layer, and a rubber sample including interfaces of the third layer and the fourth layer were cut out, with 20 mm in length × 20 mm in width × 1 mm in thickness, so that a tire circumferential direction becomes a long side, from inside of a rubber layer of a tread part of each test tire. Thicknesses of adjacent rubber layers in each rubber sample was each set to 0.5 mm. Each rubber sample was swollen in a deuterated toluene for 12 hours. Then, the equilibrium-swelled rubber sample was attached to a sample holder and irradiated with neutron rays at room temperature. Scattering intensity curves, obtained from measurements at distances of 2.5 m and 10 m from the sample to a detector, were obtained, respectively, and further, in order to obtain information on a small angle side, a scattering intensity curve, obtained from a measurement using focusing lens under a condition of a distance of 10 m from the sample to the detector, was obtained, and the obtained three scattering intensity curves were combined by the least square method. The binding of the three scattering intensity curves was performed by fixing the scattering intensity curve obtained from the measurement at the distance of 2.5 m from the sample to the detector, and then shifting the scattering intensity curve obtained from the measurement at the distance of 10 m from the sample to the detector and the scattering intensity curve obtained from the focusing lens measurement, to obtain a scattering intensity curve by the SANS measurement. From the obtained scattering intensity curve by the SANS measurement, a scattering intensity when a scattering vector was 0.12 nm⁻¹ was calculated. Besides, a scattering intensity when a scattering vector in irradiating the rubber sample including the interfaces of the first layer and the second layer with neutron rays was 0.12 nm⁻¹ was defined as X₁ (cm⁻¹), a scattering intensity when a scattering vector in irradiating the rubber sample including the interfaces of the second layer and the third layer with neutron rays was 0.12 nm⁻¹ was defined as X₂ (cm⁻¹), and a scattering intensity when a scattering vector in irradiating the rubber sample including the interfaces of the third layer and the fourth layer with neutron rays was 0.12 nm⁻¹ was defined as X₃ (cm⁻¹).

(SANS device)
   SANS: SANS measuring device attached to a beamline SANS-J in a JRR-3 research reactor owned by Japan Atomic Energy Agency
(Measurement condition)
   Wavelength of neutron ray: 6.5Å
   Neutron flux intensity of neutron ray: 9.9 × 10⁷ neutrons/cm²/s
   Distance from sample to detector: 2.5m, 10m
(Detector)
   2D detector (³He 2D detector and 2D photomultiplier + ZnS/⁶LiF detector)

### <Measurement of loss tangent tan δ and complex elastic modulus E*>

For each rubber test piece produced by being cut out with length 20 mm × width 4 mm × thickness 1 mm from inside of a rubber layer of a tread part of each test tire so that a tire circumferential direction is on a long side, using a dynamic viscoelasticity measuring device EPLEXOR (Registered Trademark) series manufactured by gabo Systemtechnik GmbH, a loss tangent tan δ was measured under a condition of temperature at 0°C and 30°C, a frequency of 10 Hz, and an elongational strain of 2.5% Moreover, for each rubber test piece, a complex elastic modulus E* was measured under a condition of a temperature at 0°C, a frequency of 10 Hz, and an elongational strain of 2.5%. Besides, a thickness direction of a sample was defined as a tire radial direction.

### <Measurement of glass transition temperature (Tg)>

For each rubber test piece produced by being cut out with length 20 mm × width 4 mm × thickness 1 mm from inside of a rubber layer of a tread part of each test tire so that a tire circumferential direction is on a long side, a temperature distribution curve of a loss tangent tan δ was measured under a condition of a frequency of 10 Hz and an elongational strain of 2.5%, using the EPLEXOR series manufactured by gabo Systemtechnik GmbH, and a temperature corresponding to the largest tan δ value in the obtained temperature distribution curve (tan δ peak temperature) was defined as a glass transition temperature (Tg). Besides, a thickness direction of a sample was defined as a tire radial direction.

### <Tensile test>

A dumbbell-shaped No. 7 test piece with a thickness of 1 mm, which was cut out from inside of a rubber layer of a tread part of each test tire so that a tire circumferential direction became a tensile direction, was prepared, and according to JIS K 6251: 2017, a tensile test was conducted under a condition of a tensile speed of 3.3 mm/sec in an atmosphere of 23°C to measure an elongation at break EB (%). Besides, a thickness direction of a sample was defined as a tire radial direction.

### <Chipping resistance>

Each test tire was incorporated into a standardized rim, filled with air to a standardized internal pressure, and then mounted on a vehicle to run on an uneven ground at a speed of 50 km/hour for 4 hours. After the running, circumferential lengths of all cracks generated on the tire surface were measured, and the maximum value of the circumferential length was determined for each tire. The results were indicated as indexes with Comparative example 1 being as 100 by the following equation. The results show that the larger the index is, the smaller the cracks are and the better the chipping resistance is. (Chipping resistance index) = (circumferential length of crack of tire in Comparative example 3) / (circumferential length of crack of each test tire) × 100

**Table 1**

| | First layer | | | | | Second layer | | Third layer | | Fourth layer | |
|---|---|---|---|---|---|---|---|---|---|---|---|
| | A1 | A2 | A3 | A4 | A5 | B1 | B2 | C1 | C2 | D1 | D2 |
| Compounding amount (part by mass) | | | | | | | | | | | |
| Step X | | | | | | | | | | | |
| NR | - | - | - | - | - | 20 | 20 | 70 | 70 | 100 | 100 |
| SBR1 | 80 | 80 | - | 80 | 80 | 50 | 50 | - | - | - | - |
| SBR2 | - | - | 80 | - | - | - | - | - | - | - | - |
| BR | 20 | 20 | 20 | 20 | 20 | 30 | 30 | 30 | 30 | - | - |
| Vulcanization accelerator | 1.5 | - | 1.5 | 1.5 | 1.5 | 1.5 | - | 1.5 | - | 1.5 | - |

| Step Y | | | | | | | | | | | |
|---|---|---|---|---|---|---|---|---|---|---|---|
| Silica | 80 | 80 | 80 | 80 | 80 | 60 | 60 | - | - | - | - |
| Carbon black | 10 | 10 | 10 | 10 | 10 | 5.0 | 5.0 | 40 | 40 | 50 | 50 |
| Silane coupling agent | 8.0 | 8.0 | 8.0 | 8.0 | 8.0 | 6.0 | 6.0 | | | 8.0 | 8.0 |
| Antioxidant 1 | 2.0 | 2.0 | 2.0 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 | 1.0 | 1.0 | 1.0 |
| Wax | 2.0 | 2.0 | 2.0 | 2.0 | 2.0 | 2.0 | 2.0 | 2.0 | 2.0 | 2.0 | 2.0 |
| Oil | 15 | 15 | 15 | 10 | 10 | 10 | 10 | 8.0 | 8.0 | 15 | 15 |
| Resin component 1 | - | - | - | 5.0 | - | - | - | - | - | - | - |
| Resin component 2 | - | - | - | - | 5.0 | - | - | - | - | - | - |
| Stearic acid | 2.0 | 2.0 | 2.0 | 2.0 | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 | 2.0 | 2.0 | 2.0 | 2.0 |

| Step F | | | | | | | | | | | |
|---|---|---|---|---|---|---|---|---|---|---|---|
| Sulfur | 1.5 | 1.5 | 1.5 | 1.5 | 1.5 | 1.5 | 1.5 | 1.5 | 1.5 | 1.5 | 1.5 |
| Vulcanization accelerator | - | 1.5 | - | - | - | - | 1.5 | - | 1.5 | - | 1.5 |
| Kneading temperature (min) | 30 | 30 | 30 | 30 | 30 | 30 | 30 | 30 | 30 | 30 | 30 |

| | First layer | | | | | Second layer | | Third layer | | Fourth layer | |
|---|---|---|---|---|---|---|---|---|---|---|---|
| | A1 | A2 | A3 | A4 | A5 | B1 | B2 | C1 | C2 | D1 | D2 |
| Physical property | | | | | | | | | | | |
| 0°C tan δ | 0.60 | 0.63 | 0.64 | 0.61 | 0.62 | 0.50 | 0.52 | 0.30 | 0.31 | 0.35 | 0.37 |
| 30°C tan δ | 0.20 | 0.22 | 0.23 | 0.21 | 0.21 | 0.16 | 0.17 | 0.10 | 0.11 | 0.13 | 0.14 |
| 0°C E* (MPa) | 5.0 | 5.2 | 5.3 | 5.1 | 5.1 | 4.0 | 4.1 | 2.5 | 2.6 | 3.0 | 3.2 |
| Tg (°C) | -20 | -22 | -18 | -15 | -16 | -30 | -31 | -50 | -52 | -40 | -42 |
| EB | 500 | 450 | 550 | 560 | 570 | 450 | 400 | 400 | 350 | 420 | 370 |

**Table 2**

| | Comparative example | | | Example | | | | | | |
|---|---|---|---|---|---|---|---|---|---|---|
| | 1 | 2 | 3 | 1 | 2 | 3 | 4 | 5 | 6 | 7 |
| First layer | A1 | A2 | A1 | A1 | A1 | A3 | A4 | A5 | A3 | A3 |
| Second layer | B2 | B2 | B1 | B1 | B2 | B1 | B1 | B1 | B1 | B1 |
| Third layer | C2 | C1 | C2 | C1 | C1 | C1 | C1 | C1 | C1 | C1 |
| Fourth layer | - | - | - | - | - | - | - | - | D1 | D2 |
| X₁ (cm⁻¹) | 0.63 | 1.40 | 0.42 | 0.42 | 0.63 | 0.36 | 0.37 | 0.39 | 0.36 | 0.36 |
| X₂ (cm⁻¹) | 1.30 | 0.53 | 0.60 | 0.33 | 0.53 | 0.33 | 0.33 | 0.33 | 0.33 | 0.33 |
| X₃ (cm⁻¹) | - | - | - | - | - | - | - | - | 0.40 | 0.50 |
| \|X₁-X₂\| (cm⁻¹) | 0.67 | 0.87 | 0.18 | 0.09 | 0.10 | 0.03 | 0.04 | 0.06 | 0.03 | 0.03 |
| \|X₂-X₃\| (cm⁻¹) | - | - | - | - | - | - | - | - | 0.07 | 0.17 |
| Chipping resistance | 95 | 85 | 100 | 104 | 102 | 112 | 110 | 108 | 113 | 109 |

From the results in Tables 1 and 2, it can be found that the tire of the present invention, in which a difference in scattering intensity of neutron rays between adjacent rubber layers of the tread is set within a predetermined range, has improved chipping resistance.

### REFERENCE SIGNS LIST

1. Circumferential groove
2. Land part
3. Tread surface
4. Extension line of land part
5. Extension line of deepest part of groove bottom of circumferential groove
6. First layer
7. Second layer
8. Third layer
9. Extension line of outer surface of second layer

## Claims

1. A tire comprising a tread, the tread comprising n (n represents an integer of 3 or more) rubber layers,
wherein, in a case where a rubber sample comprising interfaces of a k-th rubber layer (k represents an integer of 1 or more and n-2 or less) and a k+1-th rubber layer counted from a tread surface (3), cut out from the tread, is irradiated with neutron rays to perform a neutron scattering measurement, the tread is **characterized in that** the rubber composition of each layer of the tread comprises as rubber components at least one selected from the group consisting of an isoprene-based rubber, a styrene-butadiene rubber (SBR), and a butadiene rubber (BR) as rubber components and **in that**
a scattering intensity when a scattering vector calculated from a scattering intensity curve thus obtained is 0.12 nm⁻¹ is defined as Xₖ (cm⁻¹), and a rubber sample comprising interfaces of a k+1-th rubber layer and a k+2-th rubber layer counted from the tread surface (3), cut out from the tread, is irradiated with neutron rays to perform a neutron scattering measurement, and a scattering intensity when a scattering vector calculated from a scattering intensity curve thus obtained is 0.12 nm⁻¹ is defined as Xk+1 (cm⁻¹), |Xₖ - Xₖ₊₁| is 0.10 cm⁻¹ or less for at least one k,
wherein the rubber sample to be subjected to the neutron scattering measurement is cut out so as to include the interface of each rubber layer with 20 mm in length × 20 mm in width × 20 mm in thickness so that a tire circumferential direction becomes a long side, from inside of a rubber layer of a tread part of a tire, and
wherein the neutron scattering measurement is a Small-Angle Neutron Scattering (SANS) measurement with a scattering angle of 10 degrees or less, by which the target rubber sample is irradiated with neutron rays to measure a scattering intensity, and
wherein a neutron flux intensity (neutrons/cm²/s) of the neutron ray is 10³ or more, more preferably 10⁴ or more, and
wherein in the SANS measurement, a method utilizing a known magnetic structure or deuteration method is used.

2. The tire of claim 1, wherein, for all k, both Xₖ and Xₖ₊₁ are 1.00 cm⁻¹ or less.

3. The tire of claim 1 or 2, wherein the tread has circumferential grooves (1) continuously extending in a tire circumferential direction, and
wherein a deepest portion of a groove bottom of at least one of the circumferential grooves (1) is formed so as to be located inside in a tire radial direction with respect to an outermost side of a second rubber layer (7) counted from a tread surface (3).

4. The tire of any one of claims 1 to 3, wherein a total thickness of the tread is 30 mm or less.

5. The tire of any one of claims 1 to 4, wherein a tan δ at 0°C of the rubber composition of the first rubber layer (6) counted from the tread surface (3) is 0.40 or more, with the "0 °C tan δ" referring to a loss tangent tan δ under a temperature at 0°C, at a frequency of 10 Hz, at an elongational strain of 2.5%.

6. The tire of any one of claims 1 to 5, wherein an elongation at break of the rubber composition of the first rubber layer (6) counted from the tread surface (3) measured at a tensile speed of 3.3 mm/sec in an atmosphere of 23°C according to JIS K 6251: 2017 is 460% or more.

7. The tire of any one of claims 1 to 6, wherein a complex elastic modulus at 0°C (0°C E*) of the rubber composition of the first rubber layer (6) counted from the tread surface (3) is 3.0 MPa or more,
with the "0°C E*" determined at a temperature at 0°C, at a frequency of 10 Hz, and at an elongational strain of 2.5%.

8. The tire of any one of claims 1 to 7, wherein a glass transition temperature of the rubber composition of the first rubber layer (6) counted from the tread surface (3) is -25°C or higher,
with a temperature distribution curve of tan δ measured under a frequency of 10 Hz and an elongational strain of 2.5%.

9. The tire of any one of claims 1 to 8, wherein a tan at 30°C of the rubber composition of the first rubber layer (6) counted from the tread surface (3) is 0.10 or more with "tan δ at 30°C" referring to a loss tangent tan δ determined at 30°C, at a frequency of 10 Hz, at an elongational strain of 2.5%.

10. The tire of any one of claims 1 to 9, wherein a tan δ at 0°C of the rubber composition of the second rubber layer (7) counted from the tread surface (3) is 0.30 or more with "tan δ at 0°C" referring to a loss tangent tan δ determined at 0°C, at a frequency of 10 Hz, at an elongational strain of 2.5%.

11. The tire of any one of claims 1 to 10, wherein an elongation at break of the rubber composition of the second rubber layer (7) counted from the tread surface (3) measured at a tensile speed of 3.3 mm/sec in an atmosphere of 23°C according to JIS K 6251: 2017 is 410% or more.

12. The tire of any one of claims 1 to 11, wherein a complex elastic modulus at 0°C (0°C E*) of the rubber composition of the second rubber layer (7) counted from the tread surface (3) is 2.0 MPa or more, with the "0°C E*" determined at a temperature at 0°C, at a frequency of 10 Hz, and at an elongational strain of 2.5%.

13. The tire of any one of claims 1 to 12, wherein the tread has circumferential grooves (1) continuously extending in a tire circumferential direction, and
wherein, when a thickness (t1) of the first layer (6) counted from the tread surface (3) is defined as t1 (mm) and a groove depth (H) of the circumferential groove (1) is defined as H, |X₁ - X₂| / (t1/H) is 0.40 or less.

## Patentansprüche

1. Reifen, umfassend einen Laufstreifen, wobei der Laufstreifen n (n stellt eine ganze Zahl von 3 oder mehr dar) Kautschukschichten umfasst,
wobei, in einem Fall, wo eine Kautschukprobe, die Grenzflächen einer k-ten Kautschukschicht (k stellt eine ganze Zahl von 1 oder mehr und n-2 oder weniger) und einer k+1-ten Kautschukschicht, gezählt von einer Laufstreifenoberfläche (3) aus, umfasst, ausgeschnitten aus dem Laufstreifen, mit Neutronenstrahlen bestrahlt wird, um eine Neutronenstreuungsmessung durchzuführen, der Laufstreifen **dadurch gekennzeichnet ist, dass** die Kautschukzusammensetzung jeder Schicht des Laufstreifens als Kautschukkomponenten mindestens einen umfasst, der aus der Gruppe ausgewählt ist, die aus einem Isopren-basierten Kautschuk, einem Styrol-Butadien-Kautschuk (SBR) und einem Butadienkautschuk (BR) als Kautschukkomponenten besteht, und dadurch, dass
eine Streuintensität, wenn ein aus einer so erhaltenen Streuintensitätskurve berechneter Streuvektor 0,12 nm⁻¹ beträgt, als Xₖ (cm⁻¹) definiert ist, und eine Kautschukprobe, die Grenzflächen einer k+1-ten Kautschukschicht und einer k+2-ten Kautschukschicht, gezählt von der Laufstreifenoberfläche (3) aus, umfasst, ausgeschnitten aus dem Laufstreifen, mit Neutronenstrahlen bestrahlt wird, um eine Neutronenstreuungsmessung durchzuführen, und eine Streuintensität, wenn ein aus einer so erhaltenen Streuintensitätskurve berechneter Streuvektor 0,12 nm⁻¹ beträgt, als Xₖ₊₁ (cm⁻¹) definiert ist, |Xₖ - Xₖ₊₁| für zumindest ein k 0,10 cm⁻¹ oder weniger beträgt,
wobei die der Neutronenstreuungsmessung zu unterziehende Kautschukprobe von innerhalb einer Kautschukschicht eines Laufstreifens eines Reifens so ausgeschnitten ist, dass sie die Grenzfläche jeder Kautschukschicht mit 20 mm Länge × 20 mm Breite × 20 mm Dicke enthält, so dass eine Reifenumfangsrichtung eine lange Seite wird, und
wobei die Neutronenstreuungsmessung eine Kleinwinkel-Neutronenstreuungsmessung (SANS) mit einem Streuwinkel von 10 Grad oder weniger ist, durch welche die Ziel-Kautschukprobe mit Neutronenstrahlen bestrahlt wird, um eine Streuintensität zu messen, und
wobei eine Neutronenflussintensität (Neutronen/cm²/s) des Neutronenstrahls 10³ oder mehr, bevorzugter 10⁴ oder mehr beträgt, und
wobei in der SANS-Messung eine Methode verwendet wird, die eine bekannte magnetische Struktur oder Deuterierungsmethode nutzt.

2. Reifen nach Anspruch 1, wobei, für alle k, sowohl Xₖ als auch Xₖ₊₁ 1,00 cm⁻¹ oder weniger betragen.

3. Reifen nach Anspruch 1 oder 2, wobei der Laufstreifen Umfangsrillen (1) aufweist, die sich durchgehend in einer Reifenumfangsrichtung erstrecken, und
wobei ein tiefster Abschnitt eines Rillenbodens mindestens einer der Umfangsrillen (1) so ausgebildet ist, dass er sich in einer Reifenradialrichtung innen befindet, bezogen auf eine Außenseite einer von einer Laufstreifenoberfläche (3) aus gezählt zweiten Kautschukschicht (7).

4. Reifen nach einem der Ansprüche 1 bis 3, wobei eine gesamte Dicke des Laufstreifens 30 mm oder weniger beträgt.

5. Reifen nach einem der Ansprüche 1 bis 4, wobei ein tan δ bei 0°C der Kautschukzusammensetzung der von der Laufstreifenoberfläche (3) aus gezählt ersten Kautschukschicht (6) 0,40 oder mehr beträgt, wobei der "0°C tan δ" einen Verlusttangens δ bei einer Temperatur von 0°C, bei einer Frequenz von 10 Hz, bei einer Dehnungsbelastung von 2,5% bezeichnet.

6. Reifen nach einem der Ansprüche 1 bis 5, wobei eine Bruchdehnung der Kautschukzusammensetzung der von der Laufstreifenoberfläche (3) aus gezählt ersten Kautschukschicht (6), gemessen bei einer Zuggeschwindigkeit von 3,3 mm/Sek. in einer Atmosphäre von 23°C gemäß JIS K 6251:2017 460% oder mehr beträgt.

7. Reifen nach einem der Ansprüche 1 bis 6, wobei ein komplexer Elastizitätsmodul bei 0°C (0°C E*) der Kautschukzusammensetzung der von der Laufstreifenoberfläche (3) aus gezählt ersten Kautschukschicht (6) 3,0 MPa oder mehr beträgt,
wobei der "0°C E*" bei einer Temperatur von 0°C, bei einer Frequenz von 10 Hz und bei einer Dehnungsbelastung von 2,5% bestimmt ist.

8. Reifen nach einem der Ansprüche 1 bis 7, wobei eine Glasübergangstemperatur der Kautschukzusammensetzung der von der Laufstreifenoberfläche (3) aus gezählt ersten Kautschukschicht (6) -25°C oder höher ist,
wobei eine Temperaturverteilungskurve von tan δ bei einer Frequenz von 10 Hz und einer Dehnungsbelastung von 2,5% gemessen ist.

9. Reifen nach einem der Ansprüche 1 bis 8, wobei ein tan δ bei 30°C der Kautschukzusammensetzung der von der Laufstreifenoberfläche (3) aus gezählt ersten Kautschukschicht (6) 0,10 oder mehr beträgt, wobei "tan δ bei 30°C" einen Verlusttangens bezeichnet, der bei 30°C, bei einer Frequenz von 10 Hz, bei einer Dehnungsbelastung von 2,5% bestimmt ist.

10. Reifen nach einem der Ansprüche 1 bis 9, wobei ein tan δ bei 0°C der Kautschukzusammensetzung der von der Laufstreifenoberfläche (3) aus gezählt zweiten Kautschukschicht (7) 0,30 oder mehr beträgt,
wobei "tan δ bei 0°C" einen Verlusttangens tan δ bezeichnet, der bei 0°C, bei einer Frequenz von 10 Hz, bei einer Dehnungsbelastung von 2,5% bestimmt ist.

11. Reifen nach einem der Ansprüche 1 bis 10, wobei eine Bruchdehnung der Kautschukzusammensetzung der von der Laufstreifenoberfläche (3) aus gezählt zweiten Kautschukschicht (7), gemessen bei einer Zuggeschwindigkeit von 3,3 mm/Sek. in einer Atmosphäre von 23°C gemäß JIS K 6251:2017, 410% oder mehr beträgt.

12. Reifen nach einem der Ansprüche 1 bis 11, wobei ein komplexer Elastizitätsmodul bei 0°C (0°C E*) der Kautschukzusammensetzung der von der Laufstreifenoberfläche (3) aus gezählt zweiten Kautschukschicht (7) 2,0 MPa oder mehr beträgt,
wobei der "0°C E*" bei einer Temperatur von 0°C, bei einer Frequenz von 10 Hz und bei einer Dehnungsbelastung von 2,5% bestimmt ist.

13. Reifen nach einem der Ansprüche 1 bis 12, wobei der Laufstreifen Umfangsrillen (1) aufweist, die sich durchgehend in einer Reifenumfangsrichtung erstrecken, und
wobei, wenn eine Dicke (t1) der von der Laufstreifenoberfläche (3) aus gezählt ersten Schicht (6) als t1 (mm) definiert ist und eine Rillentiefe (H) der Umfangsrille (1) als H definiert ist, |X₁ -X₂| / (t1/H) 0,40 oder weniger beträgt.

## Revendications

1. Pneumatique comprenant une bande de roulement, la bande de roulement comprenant n couches de caoutchouc (n représentant un entier de 3 ou plus),
dans lequel, dans un cas où un échantillon de caoutchouc comprenant des interfaces d'une k-ième couche de caoutchouc (k représentant un entier de 1 ou plus et de n-2 ou moins) et d'une k+1-ième couche de caoutchouc comptée à partir d'une surface de bande de roulement (3), découpé à partir de la bande de roulement, est irradié avec des rayons neutroniques pour effectuer un mesurage de la diffusion des neutrons, la bande de roulement étant **caractérisée en ce que** la composition de caoutchouc de chaque couche de la bande de roulement comprend, en tant que composants de caoutchouc, au moins un caoutchouc sélectionné parmi le groupe constitué d'un caoutchouc à base d'isoprène, d'un caoutchouc styrène-butadiène (SBR), et d'un caoutchouc butadiène (BR) en tant que composants de caoutchouc, et **en ce qu'**une intensité de diffusion, quand un vecteur de diffusion calculé à partir d'une courbe d'intensité de diffusion ainsi obtenue est de 0,12 nm⁻¹, est définie comme Xₖ (cm⁻¹), et dans un cas où un échantillon de caoutchouc comprenant des interfaces d'une k+1-ième couche de caoutchouc et d'une k+2-ième couche de caoutchouc comptée à partir d'une surface de bande de roulement (3), découpé à partir de la bande de roulement, est irradié avec des rayons neutroniques pour effectuer un mesurage de la diffusion des neutrons, et une intensité de diffusion, quand un vecteur de diffusion calculé à partir d'une courbe d'intensité de diffusion ainsi obtenue est de 0,12 nm⁻¹, est définie comme Xₖ₊₁ (cm⁻¹), |Xₖ - Xₖ₊₁ | est de 0,10 cm⁻¹ ou moins pour au moins un k,
dans lequel l'échantillon de caoutchouc devant être soumis au mesurage de diffusion neutronique est découpé de manière à inclure l'interface de chaque couche de caoutchouc avec 20 mm de longueur × 20 mm de largeur × 20 mm d'épaisseur de telle sorte qu'une direction circonférentielle du pneumatique devient un côté long, depuis l'intérieur d'une couche de caoutchouc d'une partie formant bande de roulement d'un pneumatique, et
dans lequel le mesurage de diffusion neutronique est un mesurage de diffusion de neutrons aux petits angles (SANS, small-angle neutron scattering) avec un angle de diffusion de 10 degrés ou moins, grâce à quoi l'échantillon de caoutchouc cible est irradié avec des rayons neutroniques pour mesurer une intensité de diffusion, et
dans lequel une intensité de flux neutronique (neutrons/cm²/s) du rayon neutronique est de 10³ ou plus, de préférence de 10⁴ ou plus, et
dans lequel, dans le mesurage SANS, une méthode utilisant une structure magnétique connue ou une méthode de deutération est utilisée.

2. Pneumatique selon la revendication 1, dans lequel, pour tous les k, Xₖ et Xₖ₊₁ sont tous les deux de 1,00 cm⁻¹ ou moins.

3. Pneumatique selon la revendication 1 ou 2, dans lequel la bande de roulement a des rainures circonférentielles (1) s'étendant en continu dans une direction circonférentielle du pneumatique, et
dans lequel une portion la plus profonde d'un fond de rainure de l'une au moins des rainures circonférentielles (1) est formée de manière à être située à l'intérieur dans une direction radiale du pneumatique par rapport à un côté le plus à l'extérieur d'une seconde couche de caoutchouc (7) comptée à partir d'une surface de bande de roulement (3).

4. Pneumatique selon l'une quelconque des revendications 1 à 3, dans lequel une épaisseur totale de la bande de roulement est de 30 mm au moins.

5. Pneumatique selon l'une quelconque des revendications 1 à 4, dans lequel une valeur tan δ à 0 °C de la composition de caoutchouc de la première couche de caoutchouc (6) comptée à partir de la surface de bande de roulement (3) est de 0,40 ou plus, « tan δ à 0 °C» se référant à une tangente de perte tan δ à une température de 0 °C, une fréquence de 10 Hz, une contrainte à l'allongement de 2,5 %.

6. Pneumatique selon l'une quelconque des revendications 1 à 5, dans lequel un allongement à la rupture de la composition de caoutchouc de la première couche de caoutchouc (6) comptée à partir de la surface de bande de roulement (3) mesuré à une vitesse de traction de 3,3 mm/s dans une atmosphère de 23 °C selon la norme industrielle japonaise JIS K 6251:2017 est de 460 % ou plus.

7. Pneumatique selon l'une quelconque des revendications 1 à 6, dans lequel un module d'élasticité complexe à 0 °C (0 °C E*) de la composition de caoutchouc de la première couche de caoutchouc (6) comptée à partir de la surface de bande de roulement (3) est de 3,0 MPa ou plus, « 0° C E* » étant déterminé à une température de 0 °C, une fréquence de 10 Hz, et une contrainte à l'allongement de 2,5 %.

8. Pneumatique selon l'une quelconque des revendications 1 à 7, dans lequel une température de transition vitreuse de la composition de caoutchouc de la première couche de caoutchouc (6) comptée à partir de la surface de bande de roulement (3) est de -25 °C ou plus, avec une courbe de distribution de température de tan δ mesurée à une fréquence de 10 Hz et une contrainte à l'allongement de 2,5 %.

9. Pneumatique selon l'une quelconque des revendications 1 à 8, dans lequel une valeur tan δ à 30 °C de la composition de caoutchouc de la première couche de caoutchouc (6) comptée à partir de la surface de bande de roulement (3) est de 0,10 ou plus, « tan δ à 30°C » se référant à une tangente de perte tan δ déterminée à une température de 30 °C, une fréquence de 10 Hz, une contrainte à l'allongement de 2,5 %.

10. Pneumatique selon l'une quelconque des revendications 1 à 9, dans lequel une valeur tan δ à 0 °C de la composition de caoutchouc de la seconde couche de caoutchouc (7) comptée à partir de la surface de bande de roulement (3) est de 0,30 ou plus, « tan δ à 0°C » se référant à une tangente de perte tan δ déterminée à 0 °C, une fréquence de 10 Hz, une contrainte à l'allongement de 2,5 %.

11. Pneumatique selon l'une quelconque des revendications 1 à 10, dans lequel un allongement à la rupture de la composition de caoutchouc de la seconde couche de caoutchouc (7) comptée à partir de la surface de bande de roulement (3) mesuré à une vitesse de traction de 3,3 mm/s dans une atmosphère de 23 °C selon la norme industrielle japonaise JIS K 6251:2017 est de 410 % ou plus.

12. Pneumatique selon l'une quelconque des revendications 1 à 11, dans lequel un module d'élasticité complexe à 0 °C (0 °C E*) de la composition de caoutchouc de la seconde couche de caoutchouc (7) comptée à partir de la surface de bande de roulement (3) est de 2,0 MPa ou plus, « 0° C E* » étant déterminé à une température de 0 °C, une fréquence de 10 Hz, et une contrainte à l'allongement de 2,5 %.

13. Pneumatique selon l'une quelconque des revendications 1 à 12, dans lequel la bande de roulement a des rainures circonférentielles (1) s'étendant en continu dans une direction circonférentielle du pneumatique, et
dans lequel, quand une épaisseur (t1) de la première couche (6) comptée à partir de la surface de bande de roulement (3) est définie comme t1 (mm) et une profondeur de rainure (H) de la rainure circonférentielle (1) est définie comme H, |X₁ - X₂| / (t1/H) est de 0,40 ou moins.
